(19) **Europäisches Patentamt / European Patent Office / Office européen des brevets**

(11) **EP 3 491 351 B1**

(12) ## EUROPÄISCHE PATENTSCHRIFT

(45) Veröffentlichungstag und Bekanntmachung des Hinweises auf die Patenterteilung:
**08.12.2021 Patentblatt 2021/49**

(21) Anmeldenummer: **17749129.7**

(22) Anmeldetag: **18.07.2017**

(51) Int Cl.:
*G01J 1/04* (2006.01) *G01N 21/45* (2006.01)
*G01J 3/02* (2006.01)

(86) Internationale Anmeldenummer:
**PCT/EP2017/068153**

(87) Internationale Veröffentlichungsnummer:
**WO 2018/019666 (01.02.2018 Gazette 2018/05)**

(54) **VERFAHREN UND VORRICHTUNG ZUR ORTSAUFGELÖSTEN MESSUNG VON STRAHLUNGSSIGNALEN**

METHOD AND DEVICE FOR THE SPATIALLY RESOLVED MEASUREMENT OF RADIATION SIGNALS

PROCÉDÉ ET DISPOSITIF DE MESURE À RÉSOLUTION SPATIALE DE SIGNAUX DE RAYONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2016 DE 102016113703**

(43) Veröffentlichungstag der Anmeldung:
**05.06.2019 Patentblatt 2019/23**

(73) Patentinhaber:
• **Universität Stuttgart**
**70174 Stuttgart (DE)**
• **Eberhard Karls Universität Tübingen**
**72074 Tübingen (DE)**

(72) Erfinder:
• **BERNER, Marcel**
**71088 Holzgerlingen (DE)**
• **KOCH, Sascha**
**70180 Stuttgart (DE)**
• **HILBIG, Urs**
**73730 Esslingen (DE)**
• **SCHUBERT, Markus**
**72074 Tuebingen (DE)**
• **GAUGLITZ, Guenter**
**72076 Tuebingen (DE)**

(74) Vertreter: **Witte, Weller & Partner Patentanwälte mbB**
**Postfach 10 54 62**
**70047 Stuttgart (DE)**

(56) Entgegenhaltungen:
**WO-A1-2005/088264    WO-A1-2015/156782**

• **SCOTT S. HOWARD ET AL: "Frequency-multiplexed in vivo multiphoton phosphorescence lifetime microscopy", NATURE PHOTONICS, Bd. 7, Nr. 1, 16. Dezember 2012 (2012-12-16), Seiten 33-37, XP055417928, UK ISSN: 1749-4885, DOI: 10.1038/nphoton.2012.307**
• **MATTHEW. P. EDGAR ET AL: "Simultaneous real-time visible and infrared video with single-pixel detectors", SCIENTIFIC REPORTS, Bd. 5, Nr. 1, 22. Mai 2015 (2015-05-22), XP055418273, DOI: 10.1038/srep10669**
• **RUDIGER FRANK ET AL: "A label-free detection method of biochemical interactions with low-cost plastic and other transparent transducers", PROCEEDINGS OPTICAL DIAGNOSTICS OF LIVING CELLS II, Bd. 5826, 3. Juni 2005 (2005-06-03), Seite 551, XP055417366, US ISSN: 0277-786X, DOI: 10.1117/12.605431 ISBN: 978-1-5106-1354-6**
• **FLORIAN PRÖLL ET AL: "Label-free characterisation of oligonucleotide hybridisation using reflectometric interference spectroscopy", ANALYTICAL AND BIOANALYTICAL CHEMISTRY, SPRINGER, BERLIN, DE, Bd. 382, Nr. 8, 1. August 2005 (2005-08-01), Seiten 1889-1894, XP019327537, ISSN: 1618-2650, DOI: 10.1007/S00216-005-3301-6**

EP 3 491 351 B1

**Beschreibung**

Die Erfindung betrifft ein Messverfahren zur ortsaufgelösten Messung von Strahlungssignalen, insbesondere von Lichtsignalen, insbesondere zur reflektometrischen Interferenzspektroskopie (RIfS). Die Erfindung betrifft ferner eine Vorrichtung zur Messung ortsaufgelöster Strahlungssignale, insbesondere von Lichtsignalen, insbesondere zur reflektometrischen Interferenzspektroskopie (RIfS).

Die reflektometrische Interferenzspektroskopie (Reflectrometric Interference Spectroscopy) ist ein Messverfahren aus der Bioanalytik zur markerfreien und zeitaufgelösten Beobachtung von Schichtdickenänderungen. Gemäß Günther Gauglitz et al., "Strategies for label-free optical detection", Adv Biochem Engin/Biotechnol (2008) 109:395-432 basiert RIfS auf der Veränderung der Schichtdicke oder des Brechungsindex bei der Überlagerung der Teilstrahlen an dünnen Grenzflächen bei der Reflexion an der äußeren Oberfläche und an der inneren Grenzfläche. Sobald das auftreffende Licht die Schichten verlassen hat, ergeben sich konstruktive oder destruktive Interferenzen. Diese bewirken eine charakteristische Modulation der Reflektanz. Veränderungen in der Schichtdicke führen zu einer Veränderung des Minimums oder Maximums dieser Kurve (A. Brecht, G. Gauglitz/Analytica Chimica Acta 347 (1997) 219-233. RIfS kann unter Verwendung von Weißlicht mit einem Diodenarrayspektrometer zur Beobachtung durchgeführt werden. Ferner sind monochromatische Setups gebräuchlich, die mit hochauflösenden Kamerasystemen arbeiten, um zeitgleich eine größere Beobachtungsfläche untersuchen zu können.

Nachteilig bei derartigen RIfS-Systemen ist der hohe Aufwand, der mit den Detektorsystemen, insbesondere CCD-Kameras, die eine hohe Empfindlichkeit aufweisen müssen, verbunden ist. Ein besonderer Nachteil besteht darin, dass die auf der Veränderung der Schichtdicken beruhenden Intensitätsunterschiede nur sehr klein sind im Vergleich zum Gesamtsignal. Wegen der hohen Grundhelligkeit macht das Messsignal nur einen Bruchteil des detektierten Signals aus. Bei einer unzureichenden dynamischen Auflösung des Detektors ist das Messsignal nicht mehr vor dem Gesamtsignal auszumachen.

Im Stand der Technik ist es ferner grundsätzlich bekannt, in den Lichtweg zwischen Beobachtungsobjekt und Sensor örtliche Lichtmodulatoren (Spatial Light Modulator, SLM) einzubringen, die die beobachteten Helligkeiten ortsabhängig modulieren. Mithilfe digitaler Lichtmodulatoren, wie etwa mit mechanisch bewegten Lochscheiben oder Blendenstreifen, kann den Beobachtungsorten durch eine sogenannte Hadamard-Transformation eine Modulationssequenz zugeordnet werden. Bei der Hadamard-Transformation handelt es sich um eine digitale Transformation. Ein Sensor erfasst nun gleichzeitig alle Hadamardmodulierten Teilsignale der unterschiedlichen Orte. Die entsprechende mathematische Rücktransformation, angewandt auf die zeitlich diskret abgetasteten Gesamtsignalwerte gemessen am Sensor, ermöglicht die Berechnung der Helligkeitswerte an den modulierten Orten. Eine solche Ein-Sensor-Kamera ist als Hadamard Imager bekannt (Swift, R.D. et al. (1976), "Hadamard Transform Imager and Imaging Spectrometer", Applied Optics, 15(6), 1595-1609). Eine solche digitale örtliche Lichtmodulation ist auch mit Mikrospiegelarrays, DMAs oder mit reflexiven oder transmittiven LCDs-Modulatoren möglich. Hadamard-Imager werden wegen des relativ komplizierten Aufbaus in der Regel nur für Sondersituationen verwendet, wie etwa in der Satellitentechnik. Ein Hadamard-Spektrometer ist in der US 6,208,413 B1 beschrieben.

Aus Scott S. Howard et al., "Frequency-multiplexed in vivo multiphoton phosphorescence lifetime microscopy", Nature Photonics, Bd. 7, Nr. 1, 16.Dezember 2012 sind eine Vorrichtung und ein Verfahren zur Messung ortsaufgelöster Strahlungssignale mit einem örtlichen Modulator in Form eines Spatial Light Modulators SLM zur ortsaufgelösten Abbildung einer Mehrzahl von Orten mit einem Detektor in Form einer Photomultiplier Tube PMT zur Aufnahme eines Signals bekannt, mit einem Computer, der den örtlichen Modulator zur Abbildung der Orte auf den Detektor mittels Amplitudenmodulation der Orte ansteuert und das vom Detektor aufgenommene Signal mittels einer Fouriertransformation auswertet.

Aus Matthew P. Edgar et al., "Simultaneous real-time visible and infrared video with single-pixel detectors", Scientific Reports, Bd. 5, Nr. 1, 22. Mai 2015 sind ferner eine Vorrichtung und ein Verfahren zur Messung ortsaufgelöster Strahlungssignale, mit einem örtlichen Modulator in Form eines Digital-Micro-Mirror-Devices DMD zur ortsaufgelösten Abbildung der Orte bekannt, mit einem Detektor, und mit einem Computer, der den örtlichen Modulator zur Abbildung der Orte auf den Detektor mittels einer bestimmten Hadamard-Sequenz ansteuert und das vom Detektor aufgenommene Signal auswertet.

Vor diesem Hintergrund liegt der Erfindung die Aufgabe zugrunde, ein Messverfahren und eine Vorrichtung zur ortsaufgelösten Messung von Strahlungssignalen, insbesondere von Lichtsignalen zu offenbaren, die insbesondere zur reflektometrischen Intereferenzspektroskopiemessung geeignet sind und die eine hohe Dynamik bei möglichst geringen Kosten erlauben. Bevorzugt soll auch bei einem hohen Hintergrundsignal eine Messung kleinster Signalunterschiede mit hoher dynamischer Auflösung ermöglicht werden.

Diese Aufgabe wird durch eine Vorrichtung gemäß Anspruch 1 oder 2, sowie durch ein Messverfahren gemäß Anspruch 14 oder 15 gelöst. Die Aufgabe der Erfindung wird auf diese Weise vollkommen gelöst.

Erfindungsgemäß wird eine differentielle Messung von Signalen ermöglicht, beispielsweise der Signale eines Messortes (Messspot) und eines Referenzortes (Referenzspot). Wird die differentielle Messung an zwei Orten durchgeführt, so werden die Signale des Messortes gegenüber den Signalen des Referenzortes um 180° phasenverschoben. Hierbei beobachtet ein auf Ortsmodulation basierender Detektor die Helligkeit der beiden Beobachtungsorte. Durch eine Verschiebung der vom Detektor erfassten Intensitätsdifferenzen an den Beobachtungsorten in das Frequenzspektrum des Gesamtsignals kann die Intensitätsdifferenz im Frequenzraum analysiert und unmittelbar bestimmt werden. Auf diese Weise kann auch bei hohen absoluten Signalamplituden, ebenso bei starkem Umgebungslicht, eine hohe Dynamik in der Auflösung der Intensitätsdifferenz erreicht werden. Der nötige Messbereich beschränkt sich tatsächlich auf die Differenz, nicht auf die Auslenkung der Absolutsignale, wie es bei herkömmlichen RIfS-Systemen der Fall ist. Grundsätzlich können beliebig viele Paare von Messorten (Spots) simultan beobachtet werden.

Die Erfindung realisiert eine auf örtlicher Modulation basierende Detektion, welche auch bei hohen Strahlungsintensitäten die Messung kleinster optischer Signalunterschiede zwischen zwei Messorten (Spots) mit hoher dynamischer Auflösung erlaubt und damit ein Multi-Spot-RIfS-Verfahren wesentlich verbessert. Die Erfindung erlaubt ortsaufgelöste, Messungen, insbesondere Intensitätsmessungen in Flüssigkeiten, wie sie etwa bei RIfS-Messungen auftreten. Dabei können kleinste Intensitätsunterschiede aufgelöst werden. Darüber hinaus kann die Erfindung auch auf andere Messsignale angewandt werden, etwa auf Dämpfungsmessungen, wie etwa Absorptionsmessungen in Flüssigkeiten, oder in der Astronomie etwa auf die Beobachtung von Sonnen und Monden, wobei kleinste Intensitätsänderungen vor hohen Hintergrundsignalen aufgelöst werden müssen. Auch Adsorptionsmessungen im Sinne der Erfassung von Ansammlungen von Partikeln an einer Oberfläche und Auswertung eines transmittiven optischen Signals sind denkbar.

Erfindungsgemäß wird durch die ortsaufgelöste Abbildung der Messsignale in die Frequenzdomäne eine unmittelbare Erfassung des Differenzsignals ermöglicht, wodurch die Dynamik der Messung erheblich gegenüber herkömmlichen Verfahren verbessert wird.

Dies ist zum einen mit der bekannten Hadamard-Transformation möglich. Hierbei werden die beiden differenziell gemessenen Orte mit derselben Hadamard-Frequenz moduliert, wobei die Sequenz bei einem der beiden Orte invertiert ist. Sind beide Orte gleich hell, so löschen sich hierbei die Signalanteile der Träger-Sequenz gegenseitig aus und es verbleibt nur ein Gleichanteil. Man misst also eine Differenz von null, da es keinen Signalanteil mit der gesuchten Sequenz gibt. Weist einer der Orte eine andere Intensität auf, so verändert sich das Gesamtsignal, das nunmehr zusätzlich einen Signalanteil enthält. Mittels einer Hadamard-Transformation kann aus dem detektierten Signal die Intensitätsdifferenz zwischen den beiden Orten berechnet werden.

Alternativ kann mittels einer Fourier-Transformation die Intensitätsdifferenz zwischen den Orten aus dem Differenzsignal der amplitudenmodulierten, jedoch zueinander um 180° phasenverschobenen Signale der Orte mit derselben Frequenz berechnet werden. Auch hierbei löschen sich die Signalanteile derselben Trägerfrequenz von zwei Orten bei gleicher Helligkeit gegenseitig aus und es verbleibt nur ein Gleichanteil. Weist einer der Orte eine andere Intensität auf, so verändert sich das Gesamtsignal, das nunmehr zusätzlich einen Signalanteil enthält, aus dem mittels einer Fourier-Transformation die Intensitätsdifferenz berechnet werden kann.

Gemäß einer weiteren Variante werden N Orte mit derselben Modulations-$\sin^2$-Frequenz, jedoch mit einer Phasenverschiebung von jeweils 360°/N zueinander, moduliert und die Signaldifferenz zwischen den Orten ausgewertet. Die Modulation geschieht also mit der Funktion $\sin^2(ft) = \frac{1}{2}(1-\cos(2ft))$, so dass das Signal auf der Trägerfrequenz 2f liegt.

Ist die Intensität an allen Spots gleich groß, so ist der Spektralanteil bei der Modulationsfrequenz gleich null. Unterscheiden sich einer oder mehrere der Spots von den anderen Spots, so gleichen sich die Intensitäten nicht mehr gegenseitig aus und bei der Trägerfrequenz 2f ist eine Signalamplitude messbar. Auf diese Weise können eine ganze Reihe von Spots gleichzeitig überwacht werden, um z.B. eine Sternüberwachung auf Exoplaneten nach der sog. Transitmethode durchzuführen. Falls die Umlaufbahn eines Planeten so liegt, dass er aus Sicht der Erde genau vor seinem Stern vorbeizieht, erzeugen diese Bedeckungen periodische Absenkungen in dessen Helligkeit. Für solche hochpräzise Helligkeitsmessungen des Sterns ist das erfindungsgemäße Verfahren besonders geeignet, so dass die Existenz von Exoplaneten leichter nachgewiesen werden kann.

Dies kann als virtuelle Sternpunktmessung (in Analogie zum Drehstrom) angesehen werden. Wird gleichzeitig die Phasenlage überwacht, so kann ggf. auch bestimmt werden, welcher der Spots sich verändert hat.

Sofern das erfindungsgemäße Messverfahren mittels der Variante der Fourier-Transformation genutzt wird, so werden die amplitudenmodulierten Signale der Orte mittels Frequenzmultiplexing übertragen, um so eine gleichzeitige Beobachtung zu ermöglichen.

Gemäß einer weiteren Ausführung der Erfindung werden die unterschiedlichen Frequenzen mittels eines Spatial Light Modulators (SLM) erzeugt, der vorzugsweise mittels pulsweitenmodulierten Signalen (PWM-Signalen) angesteuert wird, wobei das analoge Frequenzsignal mittels Tiefpassfilterung des elektrischen Signals erhalten wird.

SLMs sind zeitdiskrete, insbesondere zeit- und wertediskrete Signalgeber. Sie stehen als transmittive und reflexive Liquid Crystal Displays (LCD) sowie als Micromirror Arrays (MMAs), auch digitale Mikrospiegelarrays (DMDs) genannt, zur Verfügung. Digitale Mikrospiegelarrays erlauben eine binäre Modulation von Licht.

DMDs können für einzelne Pixel Licht in die eine oder andere Richtung ablenken. In der Praxis stehen DMDs mit einer großen Anzahl von Mikrospiegeln zur Verfügung. Der gesamte Aufbau befindet sich auf einem Trägersubstrat, auf dem in CMOS-Technologie Speicherzellen unter den Spiegeln aufgebaut sind. Diese Speicher können genau ein Bit Information speichern, "ein" oder "aus". Die einzelnen Mikrospiegel kippen über ihre Diagonale, wobei die stellende Kraft elektrostatischen Ursprungs ist. Es stehen beispielsweise DMDs mit einer Auflösung in der Größenordnung von 1 Megapixel bzw. 1 Million Mikrospiegeln zur Verfügung, welche über einen angeschlossenen Controller angesteuert werden, um die Spiegel gleichzeitig gemäß der zuvor gespeicherten Information infolge eines Auslöseimpulses einzustellen. Mit DMDs lassen sich Schaltgeschwindigkeiten von mehreren zig Kilohertz und somit auch hohe Modulationsfrequenzen erreichen.

Um solche binären, digitalen Signalgeber für die Ausgabe eines an ein Analogsignal angenäherten Signal, etwa in Form einer Sinusschwingung, zu nutzen, ist eine Digital-/Analog-Wandlung erforderlich, wozu die binären, digitalen Signalgeber bzw. die DMDs vorzugsweise mittels PWM-Signalen angesteuert werden, wobei das analoge Frequenzsignal mittels Tiefpassfilterung erhalten wird. Hierbei erfolgt eine Abtastung mittels einer PWM-Frequenz in bestimmten Zeitintervallen. Entsprechend dem Abtastwert im jeweiligen Abtastintervall gestaltet sich die Pulsbreite in diesem Abtastintervall. Durch ein nachgeschaltetes Tiefpassfilter werden die bei der PWM entstehenden Oberschwingungen unterdrückt, wodurch das Signal am Ausgang des Filters dem gewünschten Analogsignal, etwa einem Sinussignal, entspricht. Vorzugsweise erfolgt die Tiefpassfilterung hierbei nach der Detektion des Signals im elektrischen Teil, da sich Lichtsignale physikalisch im Sinne des Frequenzspektrums nicht tiefpassfiltern lassen. Somit wird die Tiefpassfilterung hinter dem Lichtdetektor in einer elektrischen Schaltung durchgeführt. Auf diese Weise wird erfindungsgemäß ein quasi-analoger SLM durch einen digitalen SLM generiert und am Ende werden analoge Signale gewonnen.

Gemäß einer weiteren Ausgestaltung der Erfindung wird das detektierte und tiefpassgefilterte Signal in ein digitales Signal umgewandelt und anschließend werden mittels einer diskreten Fourier-Transformation, insbesondere mittels einer schnellen Fourier-Transformation (FFT), die Frequenzen berechnet und die Orte dekodiert. Somit wird die Ortsinformation durch die schnelle Fourier-Transformation aus dem aufgenommenen Zeitsignal zurückgewonnen.

Gemäß einer weiteren Ausgestaltung der Erfindung wird vor der Detektion des Signals eine optisch spektrale Zerlegung des Signals durchgeführt und das spektral zerlegte Signal wellenlängenspezifisch detektiert und mittels einer diskreten Fourier-Transformation die Intensität der Orte für jeden der detektierten optischen Spektralanteile berechnet.

Jedes der optisch spektralen Teilsignale setzt sich wiederum aus dem jeweiligen Signalanteil der unterschiedlichen Beobachtungsorte zusammen. Die optisch spektralen Teilsignale sind eine Superposition der entsprechenden, modulierten Spektralanteile an den Beobachtungsorten. Auf diese Weise ist eine hyperspektrale Beobachtung ermöglicht.

Gemäß einer weiteren Ausgestaltung der Erfindung wird eine Mehrzahl von Ortspaaren von Beobachtungsorten und Referenzorten mit jeweils derselben Modulationsfrequenz moduliert und die Signaldifferenz zwischen Beobachtungsort und Referenzort ausgewertet.

Vorzugsweise können hierbei zur Durchführung eines Nullabgleichs einzelne Beobachtungsorte und/oder Referenzorte zu- oder abgeschaltet werden.

Hierdurch kann der Dynamikbereich der Messung weiter erhöht werden. Auf diese Weise kann bei der Beobachtung von Feldern, also von Flächen, die durch eine Gruppe von SLM- bzw. DMD-Pixeln mit derselben Modulationsfrequenz beobachtet wird, ein präziser Nullabgleich durchgeführt werden.

Ist bei der differentiellen Messung die Amplitude des Signals deutlich höher als die des Referenzsignals, so kann die Anzahl aktiver Mikrospiegel für die Modulation des Signalfeldes verringert werden. Eine solche Anpassung kann selbstverständlich auch am Referenzsignalfeld oder an beiden Feldern vorgenommen werden. Durch den Abgleich von beiden Feldern für die Beobachtungsorte und die Referenzorte kann auf diese Weise eine sehr hohe Genauigkeit des Nullabgleichs erreicht werden und der Dynamikbereich weiter erhöht werden.

Die erfindungsgemäße Vorrichtung weist bevorzugt einen Frequenzmultiplexer zur simultanen Übertragung der amplitudenmodulierten Signale der Orte auf den Detektor auf.

Wie vorstehend bereits erwähnt, wird vorzugsweise als Modulator ein Spatial Light Modulator (SLM), insbesondere ein Mikrospiegelarray (DMD) verwendet, der vorzugsweise mittels Pulsweitenmodulation (PWM) ein quasi-analoges, amplitudenmoduliertes Signal ausgibt. Hierbei ist vorzugsweise ein Tiefpassfilter zur Unterdrückung der bei der PWM entstehenden Oberschwingungen vorgesehen, der vorzugsweise dem Detektor nachgeschaltet ist.

Weiter bevorzugt ist der Ausgang des Tiefpassfilters über einen Analog-Digital-Wandler (ADC) mit dem Computer gekoppelt, mithilfe dessen die Intensitätsinformation für die Orte mittels einer diskreten Fourier-Transformation, vorzugsweise mittels einer schnellen Fourier-Transformation (FFT) durchgeführt wird.

Bei einer ersten Ausführung ist eine Strahlungsquelle vorgesehen, um die SLMs bzw. die DMDs zu beleuchten, wobei die vom SLM emittierte Strahlung zum Beobachtungsobjekt übertragen wird und die vom Beobachtungsobjekt emittierte Strahlung auf den Detektor abgebildet wird.

Gemäß einem alternativen Aufbau der Erfindung wird das Beobachtungsobjekt mittels einer Strahlungsquelle beleuchtet, wobei die vom Beobachtungsobjekt emittierte Strahlung zu dem SLM bzw. DMD übertragen wird und die vom SLM bzw. DMD emittierte Strahlung auf den Detektor abgebildet wird.

Dieser Aufbau hat den Vorteil, dass hierbei ein geringeres Übersprechen (Crosstalk) zwischen den einzelnen Kanälen auftritt.

Der Detektor ist vorzugsweise als Photodetektor, insbesondere in Form einer Photodiode oder eines Photomultiplier Tubes (PMT), ausgebildet, welcher bevorzugt als Photodetektorarray ausgestaltet ist.

Für eine hyperspektrale Beobachtung können die Signale der Orte über ein Spektrometer optisch spektral aufgelöst auf das Detektorarray übertragen werden, und der Computer ist zur wellenlängenaufgelösten Berechnung der Intensitätsdifferenzen zwischen den Orten ausgebildet. Vorzugsweise weist das SLM bzw. der DMD eine Mehrzahl von Kanälen auf, und jedem Messsignal von einem Messspot wird ein Referenzsignal von einem Referenzspot zugeordnet.

Hierbei können bei einer Messung einer Mehrzahl von Orten mit derselben Frequenz einzelne der zugeordneten Referenzsignale und/oder Messsignale zwecks eines Nullpunktsabgleichs abgeschaltet oder zugeschaltet werden.

Auf diese Weise können ein sehr genauer Nullpunktabgleich und eine Erhöhung der Dynamik erreicht werden.

Dem Detektor ist vorzugsweise ein Verstärker, insbesondere ein Transimpedanzverstärker, nachgeschaltet, der über ein Hochpassfilter, ein Tiefpassfilter und einen Analog-Digital-Wandler mit dem Computer verbunden ist.

Gemäß einer weiteren Ausgestaltung der Erfindung sind Mittel zur Abbildung eines Beobachtungsobjektes auf den SLM bzw. den DMD und zur Übertragung der vom SLM bzw. DMD emittierten Signale auf den Detektor vorgesehen, ferner eine Justierkamera zur Beobachtung des Beobachtungsobjektes und zur Auswahl von Beobachtungsorten, die auf den Detektor übertragen werden.

Gemäß einer weiteren Ausgestaltung der Erfindung erfolgt eine Hochpassfilterung, vorzugsweise nach einer Verstärkung des vom Detektor aufgenommen Signals.

Hierdurch können die Gleichanteile reduziert werden.

Gemäß einer weiteren Ausgestaltung der Erfindung wird zum vom Detektor aufgenommenen Signal ein Offset-Signal addiert, um die Gleichanteile zu unterdrücken.

Hierdurch kann die Empfindlichkeit deutlich erhöht werden.

Das Offset-Signal kann beispielsweise vom tiefpassgefilterten verstärkten Signal abgeleitet werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:

Fig. 1 eine Prinzipdarstellung einer ersten Ausführung einer erfindungsgemäßen Vorrichtung zur ortsaufgelösten Messung von Strahlungssignalen;

Fig. 2 eine leicht abgewandelte Ausführung der Vorrichtung gemäß Fig. 1;

Fig. 3 eine weitere Abwandlung der Vorrichtung gemäß Fig. 1;

Fig. 4 das Grundprinzip des Messverfahrens mit der Auswahl von Beobachtungsorten und einem Frequenzmodulator für verschiedene Frequenzen;

Fig. 5 das Grundprinzip des Messverfahrens mit verschiedenen amplitudenmodulierten Frequenzen, die den einzelnen Beobachtungsorten zugeordnet sind, das analoge Summensignal und das zugeordnete Spektrum nach einer Fourier-Transformation;

Fig. 6 das Prinzip der Erzeugung eines PWM-Signals zur Modulation eines sinusförmigen Analogsignals;

Fig. 7 die erfindungsgemäße Vorrichtung gemäß Fig. 1 mit zusätzlichen Erläuterungen zum Messverfahren;

Fig. 8 a), b) eine schematische Darstellung zur Erläuterung des Prinzips der Differenzmessung, wobei in Fig. 8a) die beiden zu messenden Ausgangssignale in Form von sinusförmigen Signalen dargestellt sind, die um 180°zueinander phasenverschoben sind, wobei Fig. 8b) das Prinzipschaltbild für die Summenbildung zeigt;

Fig. 9 eine Prinzipdarstellung einer weiteren Abwandlung der erfindungsgemäßen Vorrichtung gemäß einem in der Praxis durchgeführten Testaufbau;

Fig. 10 eine Prinzipdarstellung der spektralen Zerlegung des Messsignals und die Analyse mit einem Linienspektrometer, die eine hyperspektrale Analyse ermöglicht;

Fig. 11a), b)    einen Nullpunktabgleich im Falle der Beobachtung von Feldern mit einer Mehrzahl von Flächen, die durch eine Gruppe von Mikrospiegeln mit derselben Modulationsfrequenz beobachtet werden, wobei in Fig. 11a) das Messfelder mit einer Mehrzahl aktiver Beobachtungsorte zeigt sind und Fig. 11b) das zugehörige Referenzfeld mit einer angepassten Anzahl aktiver Beobachtungsorte zeigt und

Fig. 12    eine Schaltung zur Kompensation des Gleichanteils am Eingang des Transimpedanzverstärkers.

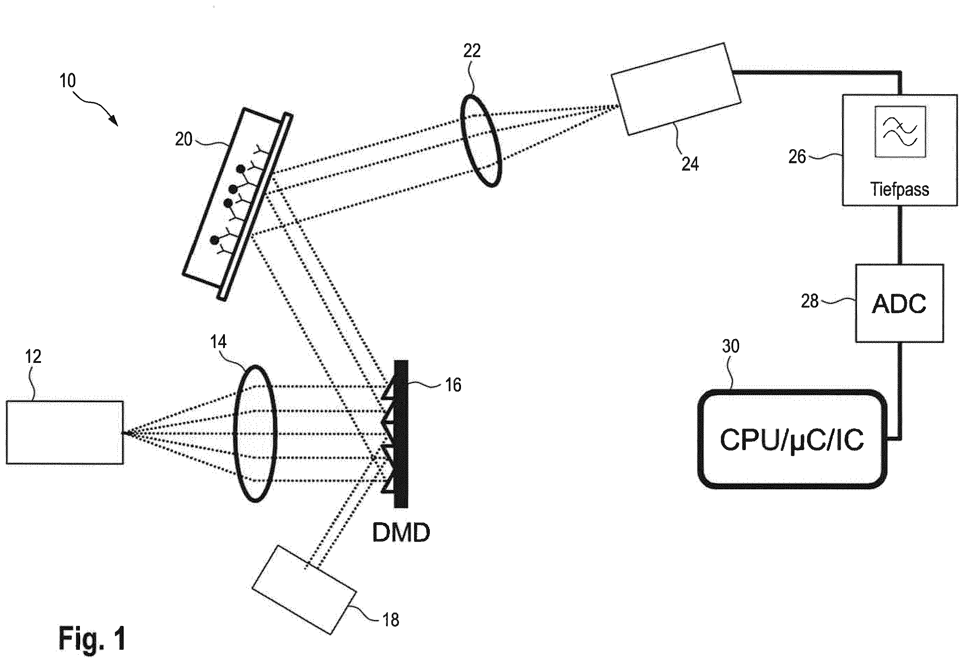

Fig. 1 zeigt einen ersten möglichen Aufbau einer erfindungsgemäßen Vorrichtung zur ortsaufgelösten Messung von Lichtsignalen, die insbesondere zur reflektometrischen Interferenzspektroskopie (RIfS) geeignet ist.

Die insgesamt mit 10 bezeichnete Vorrichtung weist eine Lichtquelle 12 auf, deren Licht über eine Linse 14 planparallel auf einen örtlichen Modulator 16 in Form eines digitalen Mikrospiegelarrays (DMD) gerichtet wird. Beispielhaft ist hier das DMD mit fünf Mikrospiegeln gezeigt, von denen drei aktiviert sind. Die nicht aktivierten Mikrospiegel lenken das einfallende Licht seitlich zu einem schwarzen Absorber 18 ab. Die aktivierten Mikrospiegel richten das Licht auf das zugeordnete Beobachtungsobjekt 20. Bei dem Beobachtungsobjekt 20 kann es sich beispielsweise um ein mit RIfS zu analysierende Objekt handeln, bei dem bestimmte zu analysierende Biomoleküle an einer Oberfläche angelagert sind, wie hier beispielhaft angedeutet ist. Es handelt sich hierbei um ein Mehrschichtsystem, beispielsweise bestehend aus einer Siliziumdioxidschicht und einer hochbrechenden Tantalpentoxidschicht und einer weiteren Siliziumdioxidschicht, die chemisch modifiziert werden kann. An jeder Phasengrenze werden Teilstrahlen des Lichts reflektiert und gebrochen transmittiert. Die reflektierten Teilstrahlen überlagern sich zu einem Interferenzspektrum, welches detektiert werden soll. Durch chemische Modifikation kann die oberste $SiO_2$-Schicht dahingehend verändert werden, dass sie mit Zielmolekülen interagieren kann. Diese Interaktion verursacht eine Änderung der physikalischen Schichtdicke und des Brechungsindex dieser Schicht. Das Produkt aus beiden wird als optische Schichtdicke definiert: n · d. Die Veränderung der optischen Schichtdicke führt zu einer Modulation des Interferenzspektrums. Daraus kann die Schichtdicke bestimmt werden. Beobachtet man die Veränderung des Interferenzspektrums über die Zeit, so ist es möglich die Adsorption an Grenzflächen, Sorption in dünne Schichten, oder die Assoziation von Bindungspartnern der Zielmoleküle zu verfolgen.

Im dargestellten Fall stellt das Beobachtungsobjekt 20 lediglich eine Oberfläche dar, die das von den Mikrospiegeln des DMDs eingestrahlte Licht mit örtlich variierender Intensität wieder reflektiert. Das reflektierte bzw. emittierte Licht gelangt zu einer Linse 22, mittels derer es auf einen Detektor 24 gebündelt wird. Bei dem Detektor 24 handelt es sich beispielsweise um einen Photodetektor. Der Photodetektor wandelt das einfallende Lichtsignal in ein elektrisches Signal um. Dieses wird einem Tiefpass 26 zugeführt. Anschließend wird das Signal über einen Analog-Digital-Konverter ADC 28 in ein digitales Signal gewandelt und schließlich einem Computer 30 zugeführt.

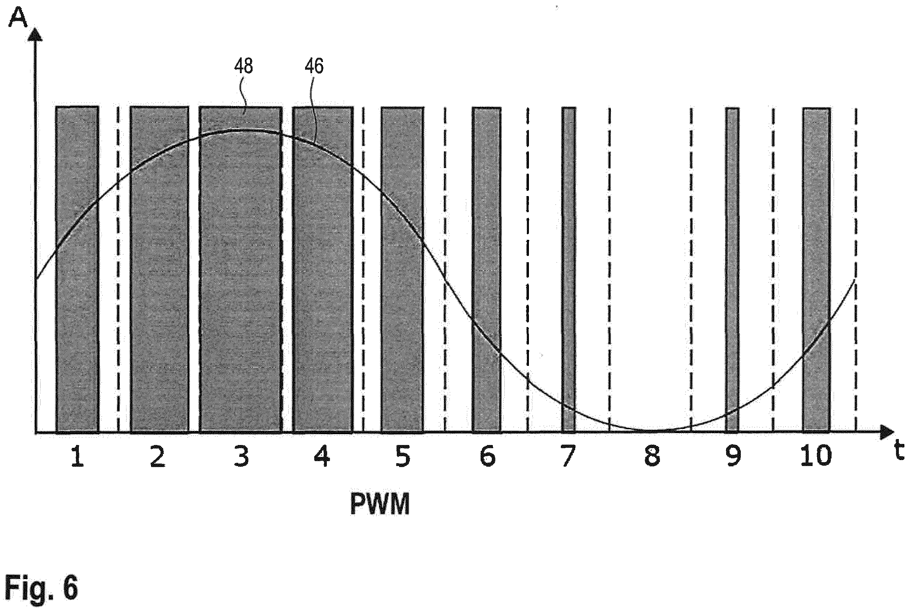

Mittels des DMDs 16 wird das einfallende Licht fürjeden Beobachtungsort, der von einem Mikrospiegel beaufschlagt wird, mit einer unterschiedlichen Frequenz moduliert. Da es sich bei dem DMD um einen binären, digitalen Signalgeber (SLM) handelt, dessen einzelne Mikrospiegel nur zwischen zwei Stellungen geneigt werden können (1 Bit), wird zur Annäherung an ein Sinussignal eine PWM-Modulatbn durchgeführt, wobei das sinusförmige Analogsignal durch eine anschließende Tiefpassfilterung gewonnen wird, wie nachfolgend noch detaillierter anhand von Fig. 6 erläutert wird.

Das DMD 16 erzeugt mittels der PWM-Modulation unterschiedliche Frequenzen für jeden Mikrospiegel. Die vom DMD 16 ausgesandten Signale fallen auf das Beobachtungsobjekt 20 und führen infolge der unterschiedlichen Intensitäten an den einzelnen Stellen des Beobachtungsobjektes 20 zu einer Amplitudenmodulation der einfallenden Lichtstrahlen. Die vom Beobachtungsobjekt 20 emittierten Lichtstrahlen werden schließlich über die nachgeordnete Linse 22 gebündelt zu dem Detektor 24 gerichtet. Das Tiefpassfilter zur Unterdrückung der Oberschwingungen, die durch die PWM-Modulation des DMDs erzielt sind, ist hier dem Detektor 24 nachgeordnet, da eine Tiefpassfilterung von Lichtsignalen physikalisch nicht möglich ist. Am Ausgang des Tiefpassfilters steht nun ein analoges Summensignal zur Verfügung, das durch Frequenzmultiplexing aus den Einzelsignalen entstanden ist. Die örtliche Information steckt hierbei in den Trägerfrequenzanteilen.

Nach der Wandlung in ein digitales Signal mittels des ADC 28 wird im Computer 30 eine Fast Fourier Transformation FFT durchgeführt, um das Frequenzspektrum des Überlagerungssignals aus dem digitalisierten Sensorsignal zu berechnen.

Um eine Proportionalität zwischen dem berechneten Frequenzspektrum und dem analogen Intensitätssignal der einzelnen Beobachtungsorte sicherzustellen, versteht es sich, dass der Detektor 24 im Linearbereich arbeiten muss.

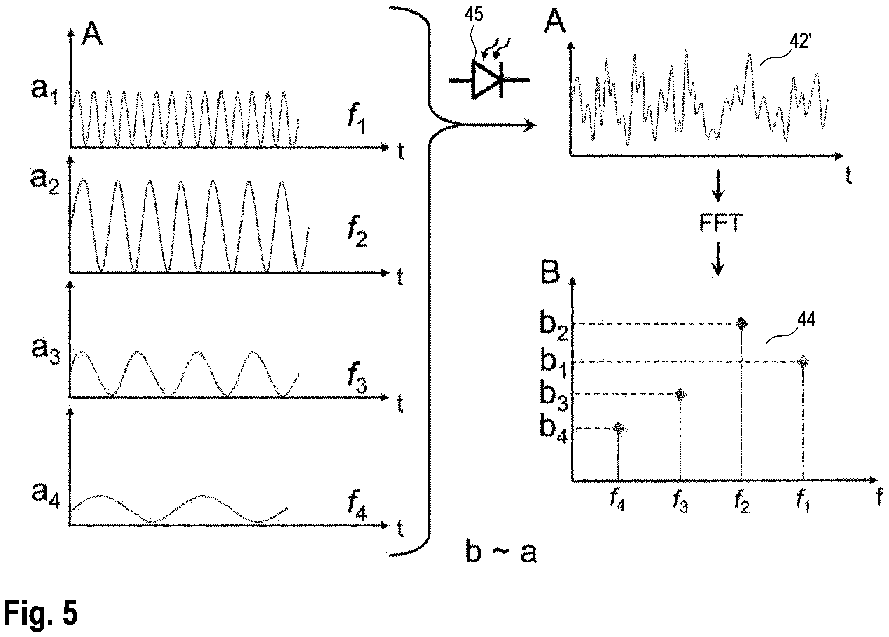

Aus den berechneten Intensitäten der verschiedenen Frequenzen kann dann die Ortsinformation zurückgewonnen werden, wie nachfolgend noch näher anhand von Fig. 5 erläutert wird.

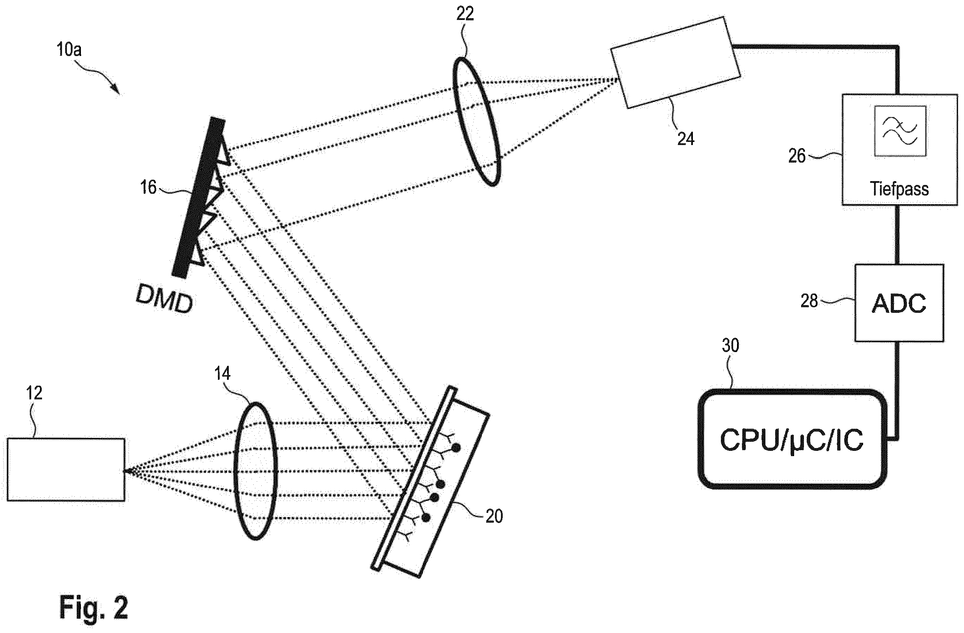

Fig. 2 zeigt eine Abwandlung der Vorrichtung gemäß Fig. 1, die insgesamt mit 10a bezeichnet ist. Hierbei und auch bei den nachfolgenden Figuren werden für entsprechende Teile entsprechende Bezugsziffern verwendet.

Hierbei wird das Beobachtungsobjekt 20 direkt über die Lichtquelle 12 mit der zugeordneten Linse 14 beleuchtet. Die vom Beobachtungsobjekt 20 emittierte Lichtstrahlung wird dann auf den Modulator, das Mikrospiegelarray DMD 16, gerichtet. Am DMD 16 erfolgt wiederum die PWM-Modulation, wie zuvor erläutert. Der nachfolgende Aufbau entspricht dem zuvor anhand von Fig. 1 beschriebenen Aufbau. Das von den aktivierten Mikrospiegeln reflektierte Licht gelangt also über eine nachfolgende Linse 22 zum Detektor 24, dessen Ausgangssignal über den Tiefpass 26 und den nachgeordneten ADC 28 in digitalisierter Form dem Computer 30 zur Analyse zugeführt wird.

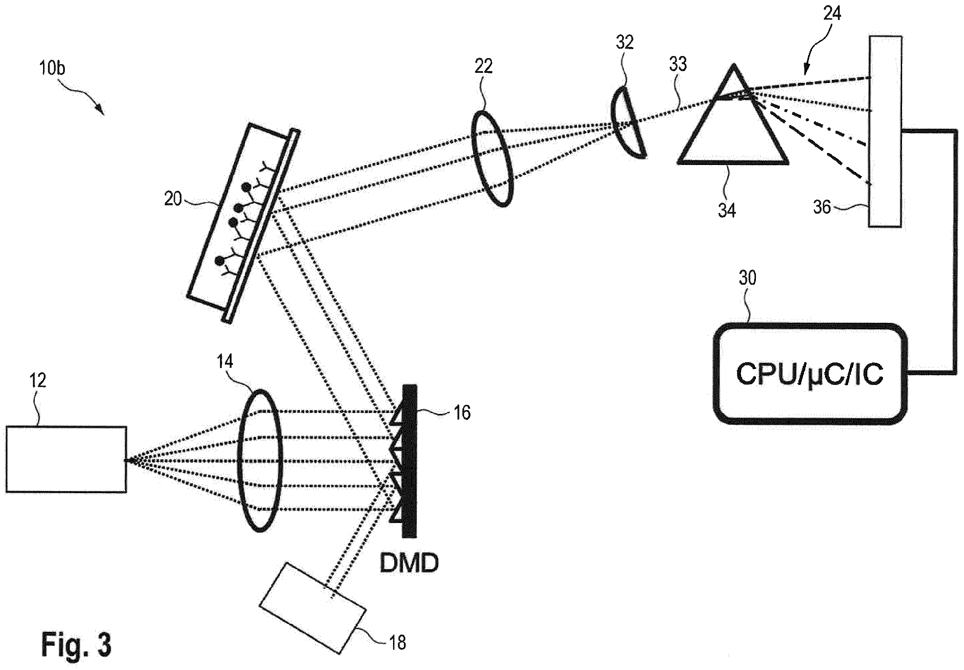

Fig. 3 zeigt eine weitere Abwandlung der Vorrichtung gemäß Fig. 1, die insgesamt mit 10b bezeichnet ist.

Der Detektor 24 besteht hierbei nicht aus einem Photodetektor, sondern aus einem Prisma 34 zur spektralen Zerlegung und aus einem nachgeordneten Linienspektrometer 36 mit einem Photodetektor-Array. Das vom Beobachtungsobjekt 20 emittierte Licht wird über die Linse 22 und eine weitere Linse 32 zu einem Lichtstrahl gebündelt, der auf das Prisma 34 einfällt und in seine spektralen Bestandteile zerlegt wird, wie hier beispielhaft mit vier Linien angedeutet ist. Je nach der Menge der hintereinander angeordneten Detektorelemente kann eine unterschiedliche Menge von Spektralanteilen analysiert werden. Beispielsweise können mit vier Detektorelementen vier unterschiedliche optische Spektralanteile unterschieden werden. Jedes dieser optisch spektralen Teilsignale setzt sich wiederum aus den jeweiligen Signalanteilen der unterschiedlichen Beobachtungsorte zusammen. Auf diese Weise ist mit der nachfolgenden FFT-Analyse (eine FFT für jeden optischen Spektralanteil) im Computer 30 eine hyperspektrale Analyse möglich (auf die Darstellung des Tiefpasses 26 und des nachfolgenden ADC 28 wurde in Fig. 3 der Einfachheit halber verzichtet).

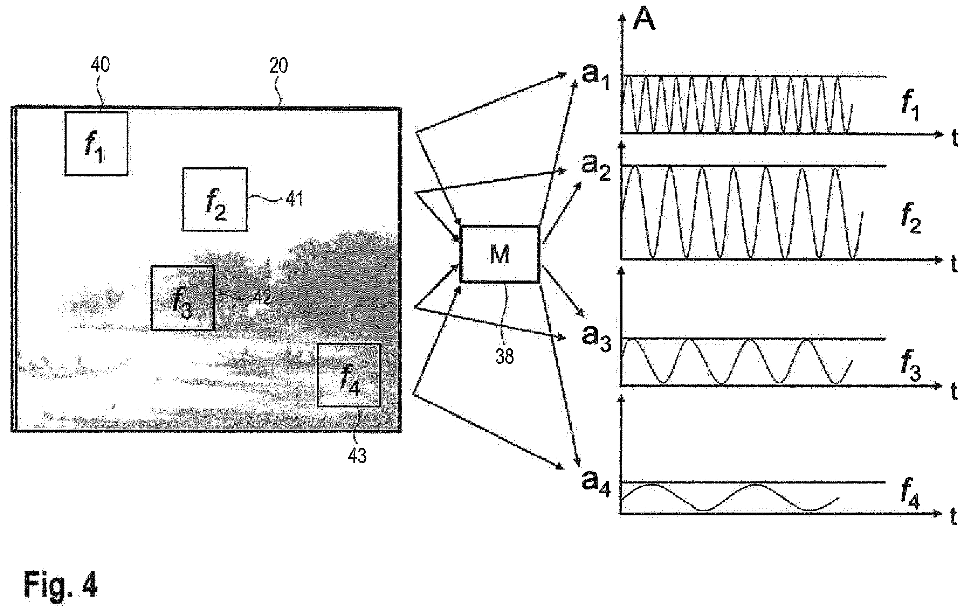

Das Messprinzip wird nachfolgend anhand der Fig. 4 bis 8 nochmals näher erläutert.

Fig. 4 zeigt ein Beobachtungsobjekt 20 mit vier Beobachtungsorten (Spots) 40, 41, 42, 43, die jeweils einen bestimmten Ausschnitt aus dem Beobachtungsobjekt 20 darstellen. Jedem Beobachtungsort (Spot) wird eine bestimmte Frequenz $f_1$, $f_2$, $f_3$, $f_4$ zugeordnet, die von einem Modulator 38 erzeugt wird. Es ergeben sich somit vier unterschiedliche Frequenzen $f_1$, $f_2$, $f_3$, $f_4$, die den einzelnen Spots 40, 41, 42, 43 zugeordnet sind und die in Abhängigkeit von der Intensität der Spots 40, 41, 42, 43 amplitudenmoduliert werden. Es ergeben sich somit die einzelnen Teilsignale, die im rechten Teil von Fig. 4 dargestellt sind. Diese amplitudenmodulierte Teilsignale mit den Intensitäten $a_1$, $a_2$, $a_3$, $a_4$ werden gemäß Fig. 5 zu einem Summensignal überlagert, so dass sich das Summensignal 42' in der rechten oberen Hälfte von Fig.

5 ergibt. Die Überlagerung erfolgt einfach durch die Zusammenführung der Einzelsignale mittels der Linse 22, in Fig. 5 gesondert als Frequenzmultiplexer 45 ausgewiesen.

Aus dem Summensignal 42' wird nach anschließender Dgitalisierung durch eine Fast-Fourier-Transformation FFT im Computer 30 wieder die Frequenzinformation mit den Trägerfrequenzen $f_1$, $f_2$, $f_3$, $f_4$ berechnet, wobei die zugeordneten Amplituden $b_1$ $b_2$, $b_3$, $b_4$ die Intensitätsinformation der Beobachtungsorte 40, 41, 42, 43 abbilden. Sofern die Linearität des Detektors gewährleistet ist, ist die Amplitude $b_1$, $b_2$, $b_3$, $b_4$ im Frequenzspektrum proportional zur Helligkeit $a_1$, $a_2$, $a_3$, $a_4$ der beobachteten Spots 40, 41, 42, 43. Dies ist über den Zusammenhang mit der Fourier-Transformation bzw. der Definition des Frequenzspektrums inhärent gegeben.

Anhand von Fig. 6 wird nunmehr die PWM-Modulation des DMDs 16 zur Erzeugung der unterschiedlichen Frequenzen näher erläutert.

In Fig. 6 zeigt die Linie 46 das gewünschte Sinussignal, das durch PWM erzeugt werden soll. Wird das zu erzeugende Signal 46 gemäß der sog. PWM-Frequenz $f_{PWM}$ in bestimmten Zeitintervallen abgetastet, so ergeben sich in den einzelnen Abtastintervallen, die auf der Zeitachse durch gleich beabstandete, gestrichelte Linien dargestellt sind, unterschiedliche Pulsbreiten. Abtastintervalle mit großer Signalamplitude erhalten einen breiten Puls (vgl. Intervall 3, 100 % Pulsbreite), Abtastintervalle mit kleiner Signalamplitude erhalten einen schmalen Puls (vgl. Intervall 8, 0 % Pulsbreite). Dabei gilt für die PWM-Frequenz $f_{PWM}$, dass $f_{PWM} > 2 f_{max}$, wobei $f_{max}$ die größte auftretende Frequenz im Analogsignal ist (Nyquist-Bedingung). Bei den verwendeten DMDs ist $f_{max}$ die maximale Schaltfrequenz der Mikrospiegel.

Durch ein nachgeschaltetes Tiefpassfilter werden die bei der PWM entstehenden Oberschwingungen unterdrückt, wodurch das Signal am Ausgang des Filters dem gewünschten Analogsignal 46 entspricht.

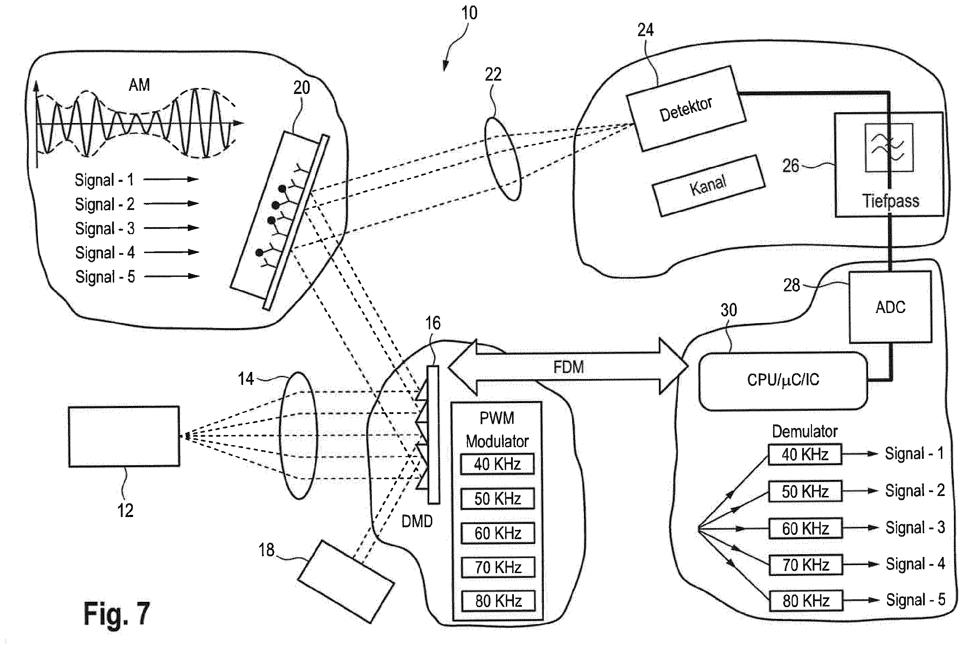

Fig. 7 zeigt nochmals die Vorrichtung 10 gemäß Fig. 1 mit zusätzlich eingeblendeten Informationen, wodurch die Zusammenhänge des Messverfahrens weiter verdeutlicht sind.

Das DMD 16 wird mittels der Lichtquelle 12 über eine Linse 14 beleuchtet. Das DMD 16 wird mittels PWM-Modulation angesteuert, so dass für jeden Mikrospiegel eine eigene Frequenz moduliert wird. Beispielhaft sind hier fünf Mikrospiegel dargestellt, denen die Frequenzen 40 kHz, 50 kHz, 60 kHz, 70 kHz und 80 kHz zugeordnet sind. Durch die PWM-Modulation des DMDs modulieren die einzelnen Mikrospiegel unterschiedliche Orte des Beobachtungsobjektes 20 mit unterschiedlichen Frequenzen. Die unterschiedlichen Intensitäten an den verschiedenen Spots des Beobachtungsobjektes 20 führen zu einer Amplitudenmodulation AM der vom DMD 16 eingestrahlten Trägerfrequenzsignale.

Die vom Beobachtungsobjekt emittierten Signale werden über die Linse 22 gesammelt (Frequenzmultiplexing, Frequency Division Multiplexing - FDM), auf den Detektor 24 gerichtet, wobei es sich um einen einzigen Photodetektor handeln kann. Der Detektor setzt das einfallende Licht-Summensignal in ein elektrisches Summensignal um. Dieses gelangt anschließend zum Tiefpass 26 und dann zum ADC 28 zur Umsetzung in ein digitales Signal. Das digitale Signal wird dem Computer 30 zur Analyse zugeführt. Im Computer 30 wird durch die FFT das Summensignal wieder demoduliert, um die einzelnen Ausgangsfrequenzen 40 kHz, 50 kHz, 60 kHz, 70 kHz, 80 kHz wieder zurückzugewinnen und die zugeordnete Amplituden zu bestimmen, wie in Fig. 5 verdeutlich ist.

Erfindungsgemäß wird nun jeweils ein Paar von Beobachtungsorten mit derselben Frequenz moduliert und daraus das Differenzsignal gebildet.

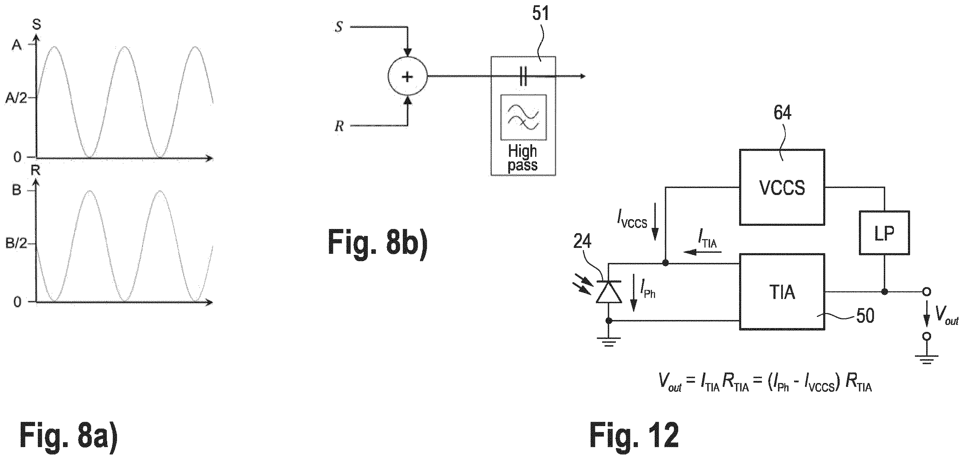

Fig. 8 zeigt beispielhaft in Fig. 8a) im oberen Teil ein sinusförmiges Messsignal S mit der Amplitude A und im unteren Teil das zugehörige Sinussignal R eines Referenzortes mit der Amplitude B, das um 180° gegenüber dem Messsignal S phasenverschoben ist. Gemäß Fig. 8b) werden die beiden Signale S und R miteinander addiert und anschließend durch ein Hochpassfilter 51 geleitet, um den Gleichanteil auszufiltern.

Zum Begriff Gleichanteil: Gibt es zwei Beobachtungspunkte mit den Helligkeiten A0 und B0 und werden diese mit derselben Frequenz und einem Phasenunterschied von 180° moduliert (Fouriertransformation), so gilt:

$$\text{Signal A} = A0*\tfrac{1}{2}*(1+\sin(wt)),$$

$$\text{Signal B} = B0*\tfrac{1}{2}*(1-\sin(wt)).$$

Ist nun AO=BO, dann löscht sich nur der Frequenzanteil bei der Modulationsfrequenz aus. Zurück bliebt ein Gesamtsignal G das nur noch aus dem Gleichanteil besteht:

$$G = A+B = A0.$$

Ein Signalanteil bei der Modulationsfrequenz ergibt sich erst, wenn A0 ungleich B0 ist. Dann muss aber immer noch der restliche Gleichanteil unterdrückt werden (der bei kleinen Differenzen immer noch verhältnismäßig groß ist). Das geschieht durch ein Hochpassfilter.

Vorzugsweise werden also bei der Messung jeweils ein Signalspot und ein Referenzspot mit derselben Frequenz moduliert, um bei der anschließenden Summenbildung der zueinander phasenverschobenen Signale lediglich die Intensitätsdifferenz zwischen Signalspot und Referenzspot bestimmen zu können.

Dieses Verfahren ist insbesondere für die RIfS-Analyse vorteilhaft, da hierbei kleinste Änderungen im reflektierten Strahlungsspektrum bei gleichzeitig hoher Hintergrundintensität ermittelt werden müssen. Bei der RIfS-Analyse macht das eigentliche Messsignal nur einen Bruchteil des detektierten Signals aus. Bei einer unzureichenden dynamischen Auflösung des Detektors ist das Messsignal bei herkömmlichen RIfS-Messverfahren nicht mehr vom Gesamtsignal auszumachen.

Die erfindungsgemäße differentielle Messung führt zu einer erheblichen Dynamikvergrößerung und damit zu einem deutlichen Vorteil gegenüber herkömmlichen RIfS-Messverfahren.

Alternativ ist es auch denkbar, statt der Sinusmodulation eine Modulation mit einer $\sin^2$-Funktion durchzuführen. In diesem Fall werden N Beobachtungspunkte (Spots) mit derselben Frequenz, jedoch mit einer Phasenverschiebung um jeweils 360°/N moduliert. Ist die Intensität an allen Spots gleich groß, so ist der Spektralanteil bei der Modulationsfrequenz 2f gleich null. Unterscheiden sich einer oder mehrere der Spots von den anderen Spots, so gleichen sich die Intensitäten nicht mehr gegenseitig aus und bei der Trägerfrequenz 2f ist eine Signalamplitude messbar. Auf diese Weise können eine ganze Reihe von Spots gleichzeitig überwacht werden, um z.B. eine Sternüberwachung auf Exoplaneten nach der sog. Transitmethode durchzuführen. Dies kann als virtuelle Sternpunktmessung (in Analogie zum Drehstrom) angesehen werden. Wird gleichzeitig die Phasenlage überwacht, so kann ggf. auch bestimmt werden, welcher der Spots sich verändert hat.

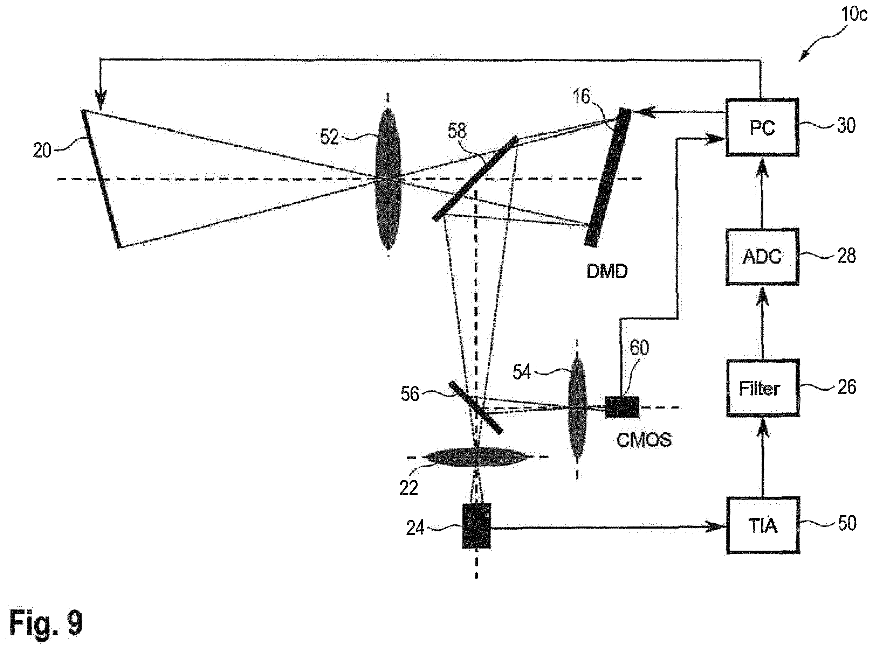

In Fig. 9 ist ein experimenteller Aufbau dargestellt, der zur Verifizierung der vorgestellten Messmethode verwendet wurde. In Fig. 9 ist eine erfindungsgemäße Messvorrichtung insgesamt mit der Ziffer 10c bezeichnet.

Zusätzlich zu der Anordnung etwa gemäß Fig. 2 ist hierbei eine Justierkamera 60 in Form einer CMOS-Kamera vorgesehen. Um die Integration der Justierkamera 60 in den Strahlenablauf zu ermöglichen, umfasst die Vorrichtung 10c neben dem Beobachtungsobjekt 20 und dem DMD 16 zwei halbdurchlässige Spiegel 56, 58 und drei Linsen 22, 52, 54. Ein Computer 30 steuert den DMD 16 und das Beobachtungsobjekt 20, das aus einem LCD-Simulationsfeld bestehen kann.

Der Computer 30 empfängt das Bildsignal der Justierkamera 60. Ein Transimpedanzverstärker (TIA) 50 wandelt das Signal des Detektors 24 in ein Spannungssignal um und verstärkt dieses. Der Ausgang des Transimpedanzverstärkers 50 ist über ein Filter 26 mit einem Analog/Digital-Konverter ADC 28 verbunden, dessen Ausgang mit dem Computer 30 verbunden ist. Ausgehend von dem Beobachtungsobjekt 20 in der linken oberen Ecke der Abbildung gelangt Licht durch die Linse 52, die ein scharfes Bild durch den halbdurchlässigen Spiegel 58 auf dem DMD 16 erzeugt. Wegen der schrägen Anordnung zwischen Beobachtungsobjekt und DMD 16 muss die sogenannte Scheimpflug-Bedingung erfüllt werden: Eine scharfe Abbildung auf einer verkippten Ebene wird erreicht, wenn sich Bildebene, Linsenebene und Objektebene auf derselben Gerade schneiden.

Das DMD 16 moduliert auf die jeweiligen Messorte (Spots), die ihnen zugeordnete Trägerfrequenz mittels PWM auf. Dabei bedeutet der "Ein"-Zustand, dass das DMD 16 das Licht geradewegs zurückreflektiert in Richtung des halbdurchlässigen Spiegels 58, und der "Aus"-Zustand bedeutet, dass die Mikrospiegel des DMDs 16 das Licht nach oben aus dem System heraus ablenken. Das amplitudenmodulierte Licht fällt somit zurück zum halbdurchlässigen Spiegel 58, welcher es nach unten zum zweiten halbdurchlässigen Spiegel 56 ablenkt. Von hier aus gelangt wiederum die eine Hälfte des Lichts auf die Linse 22 und wird auf den Detektor 24 fokussiert. Die andere Hälfte des Lichtes gelangt durch eine Linse 54 zur Justierkamera 60, wo eine scharfe Abbildung entsteht. Auch hierbei wird die Scheimpflug-Bedingung eingehalten.

Die Justierkamera 60 ist lediglich ein optionaler Zusatz und erleichtert die Justierung und Steuerung des Systems. Der Computer übernimmt die Steuerung des DMD 16 und empfängt das Bild der Justierkamera 60 sowie das Signal des Detektors 24, welches zunächst durch den Transimpedanzverstärker TIA 50 verstärkt wird, durch das Filter 26 gelangt und schließlich im ADC 28 in ein Digitalsignal umgesetzt wird. Als Beobachtungsobjekt 20 dient ein LCD-Display, welches vom Computer 30 angesteuert wird.

Als DMD 16 wurde ein DMD von der Firma Texas Instruments gemäß der Bezeichnung DLP7000 DLP® 0.7 XA 2x LVDS Type A DMD verwendet.

Im dargestellten Fall ist als Detektor 24 lediglich eine einzige Photodiode vorgesehen, eine Siliziumphotodiode der Firma Thorlabs, des Typs SM05PD1A mit einem Wellenlängenbereich von 350 bis 1100 nm, einer aktiven Sensorfläche von 13 mm$^2$ und einer maximalen Empfindlichkeit von 0,37 A/W bei 980 nm.

Der Transimpedanzverstärker 50 DLPCA-200 der Firma FEMTO bietet einstellbare Verstärkungsfaktoren von $1 \times 10^3$ bis $1 \times 10^{11}$ V/A bei einer maximalen Bandbreite von 500 kHz. Einem Verstärker ist zunächst ein Hochpassfilter nachgeschaltet, dann folgt ein zweiter Verstärker und schließlich ein optional verwendbarer Tiefpass (abhängig vom gewählten Beobachtungsfrequenzband). Das Hochpassfilter dient zur Unterdrückung von Gleichanteilen.

Das Filter 26 umfasst eine Filterbank aus insgesamt drei Filterstufen mit einem Tiefpassfilter zur Unterdrückung hochfrequenter Störsignale, einem Hochpassfilter zur Dämpfung von Gleichanteilen und sehr kleinen Frequenzen, und mit einem Kerbfilter (Notch-Filter) insbesondere zur Unterdrückung von störenden Netzfrequenzen (50 Hz und 60 Hz).

Bei dem ADC 28 handelt es sich um ein Red-Pitaya-Board mit einem Prozessor Dual core ARM Cortex A9, einer Sampling Rate von 125 MHz und einer Auflösung von 14 Bit.

Mit der Vorrichtung 10c wurde die Eignung der Messanordnung für eine RIfS-Messung mit einem Mikrofluidikkanal aus dem RIfS-Bereich als Beobachtungsquelle nachgewiesen. Um unabhängig davon beliebige Messobjekte untersuchen zu können, wurde als Beobachtungsobjekt auch ein LCD-Bildschirm als flexibles Simulationsfeld verwendet.

Für die RIfS-Messung wurde ein Mikrofluidikkanal aus separaten Kanälen mit je einem Eingang und einem gemeinsamen Ausgang verwendet. Hierzu saugt eine Pumpe zwei zu vergleichende Lösungen aus Behältern an und pumpt sie durch elastische Schläuche in die beiden Flusskanäle. Mit der Messvorrichtung 10c werden die Helligkeiten des jeweils reflektierten Lichtes in den Flusskanälen gemessen.

Mit der Vorrichtung 10c wurde die allgemeine Funktionsfähigkeit bestätigt und es wurden erste Messungen an einem LCD-Bildschirm durchgeführt. Auch die Messungen an einem RIfS-Flusskanal waren erfolgreich.

Es wurden Frequenzbänder im Bereich von 15 Hz bis 4000 Hz mit PWM-Signalen untersucht. Anhand des LCD-Simulationsfeldes wurde eine Auflösung von 13 Bit nachgewiesen.

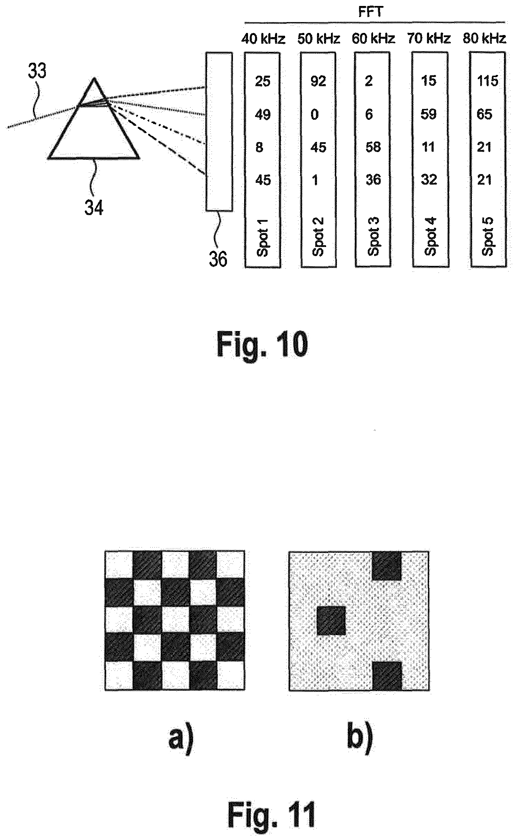

Anhand von Fig. 10 wird nunmehr kurz die weitere Option erläutert, eine hyperspektrale Analyse durchzuführen.

Hierzu wird der Detektor 24 durch ein dispersives Linienspektrometer 36 gemäß Fig. 10 ersetzt (vgl. auch Fig. 3). In Fig. 10 zeigt die gepunktete Linie 33 das auf den Detektor einfallende gebündelte Licht. Das Prisma 34 spaltet dieses Licht in seine optischen Spektralanteile auf. Das Strahlungsspektrum fällt nun auf das Photodetektor-Array 36 mit (hier beispielhaft) vier Elementen und erlaubt daher die Unterscheidung von vier optischen Spektralanteilen des Strahlungsspektrums. Jedes dieser optisch spektralen Teilsignale setzt sich wiederum aus den jeweiligen Signalanteilen der unterschiedlichen Beobachtungsorte (Spot 1 bis Spot 5) zusammen. Die optisch spektralen Teilsignale sind eine Superposition der entsprechenden, modulierten Spektralanteile an den Beobachtungsorten. Die Information über die Zuordnung zu den Beobachtungsorten befindet sich im Frequenzspektrum (40 kHz, 50 kHz, 60 kHz, 70 kHz, 80 kHz) der optisch spektralen Teilsignale. Mittels der FFT kann die Information an den Beobachtungsorten im Frequenzspektrum für jeden der Spektralanteile errechnet werden. Auf diese Weise kann eine hyperspektrale Kamera aufgebaut werden.

Gemäß einem weiteren Merkmal der Erfindung können, um einen hohen Dynamikbereich zu erhalten, Felder beobachtet werden, also Flächen, die durch eine Gruppe von Mikrospiegeln mit derselben Modulationsfrequenz beobachtet werden. Es kann dann ein Nullabgleich durchgeführt werden. Fig. 11 zeigt diesen Nullabgleich beispielhaft für eine differentielle Messung.

Fig. 11a) zeigt für eine differentielle Messung den Signal-Spot mit 25 Beobachtungspixeln und Fig. 11b) den zugeordneten Referenz-Spot mit drei aktivierten Beobachtungspixeln. Ist die Amplitude des Signals deutlich höher als die des Referenzsignals, so wird die Anzahl aktiver Mikrospiegel für die Modulation des Signalfeldes verringert. Eine solche Anpassung kann natürlich auch am Referenzsignalfeld oder an beiden Feldern vorgenommen werden. Durch den Abgleich von beiden Feldern kann eine sehr hohe Genauigkeit des Nullabgleichs erzielt werden. Außerdem kann der Dynamikbereich weiter vergrößert werden.

In Fig. 12 ist eine weitere Möglichkeit zur Steigerung der Empfindlichkeit durch Unterdrückung der Gleichanteile dargestellt. Bei der Vorrichtung gemäß Fig. 9 enthält das Filter 26 zur Unterdrückung der Gleichanteile ein Hochpassfilter (neben dem je nach Frequenz zuschaltbaren Tiefpassfilter).

Durch eine zusätzliche Schaltung gemäß Fig. 12 kann der Gleichanteil bereits vor dem Transimpedanzverstärker 50 reduziert werden. Hierzu kann man an den Knotenpunkt von Transimpedanzverstärker 50 und Detektor 24 eine zusätzliche Stromquelle anschließen und diese so einstellen/regeln, dass ein Anteil des Photostroms in die Quelle statt in den Transimpedanzverstärker 50 fließt. Man kann damit vor den Transimpedanzverstärker 50 einen Offset implementieren.

Der Offset durch die zusätzliche Stromquelle am Knotenpunkt von Transimpedanzverstärker 50 und Detektor 24 erlaubt es, den Signalanteil der Grundhelligkeit/Gleichanteile bereits von dem Transimpedanzverstärker 50 zu reduzieren. In Fig. 12 bedeutet VCCS eine spannungsgesteuerte Stromquelle (Voltage Controlled Current Source) 64.

Die Ausgangsspannung $V_{out}$ am Ausgang des Transimpedanzverstärkers 50 ist dann:

$$V_{out} = I_{TIA} \, R_{TIA} = (I_D - I_{VCCS}) \, R_{TIA},$$

wobei $R_{TIA}$ der Verstärkungswiderstand (Rückkoppelwiderstand) des Transimpedanzverstärkers 50 ist, $I_D$ der Detektorstrom ist, $I_{TIA}$ der Strom des Transimpedanzverstärkers 50 und $I_{VCCS}$ der Strom der VCCS 64 ist. Der Tiefpass LP und die VCCS 64 bilden eine aktive Regelschleife.

Die Range des Transimpedanzverstärkers 50 kann dadurch besser genutzt werden. Das gesamte Verfahren kann dann noch kleinere Signale vor der Grundhelligkeit/Gleichanteil ausmachen.

Der auf den Detektor 24 fallende Gleichanteil kann jedoch nicht reduziert werden.

Mit demselben physikalischen Aufbau etwa gemäß Fig. 1 bis 3 oder Fig. 9 kann eine differentielle Messung auch unter Verwendung einer Hadamard-Transformation anstelle der Fourier-Transformation durchgeführt werden. Zusätzlich wären auch hierbei die Verwendung eines Hochpasses und/oder eine Implementierung eines Strom-Offsets vor dem Transimpedanzverstärker zur Unterdrückung der Gleichanteile vorteilhaft.

Hierzu werden die beiden differentiell gemessenen Orte mit derselben Hadamard-Frequenz moduliert, wobei die Sequenz bei einem der beiden Orte invertiert ist. Sind beide Orte gleich hell, so löschen sich hierdurch (analog zur differentiellen Messung auf einer Trägerfrequenz mit der Fourier-Transformation) die Signalanteile auf der Träger-Sequenz gegenseitig aus und es bleibt auch hier nur ein Gleichanteil übrig.

Grundsätzlich sind auch weitere digitale Modulationsverfahren zur Realisierung der differentiellen Messung möglich.

**Patentansprüche**

1. Vorrichtung zur Messung ortsaufgelöster Strahlungssignale, insbesondere von Lichtsignalen, insbesondere zur reflektometrischen Interferenzspektroskopie (RIfS), mit einem örtlichen Modulator (16) zur ortsaufgelösten Abbildung einer Mehrzahl von Ortspaaren, mit einem Detektor (24) zur Aufnahme eines Signals, und mit einem Computer (30), der konfiguriert ist, entweder den örtlichen Modulator (16) zur Abbildung der Orte eines Paares auf den Detektor (24) mittels einer bestimmten Hadamard-Sequenz, wobei eine der Hadamard-Sequenzen an einem Ort gegenüber der anderen am zugeordneten anderen Ort invertiert ist, anzusteuern und das vom Detektor (24) aufgenomme Signal mittels einer Hadamard-Transformation auszuwerten, um die Intensitätsdifferenz zwischen den Orten des Paares zu berechnen, oder den örtlichen Modulator (16) zur Abbildung der Orte auf den Detektor (24) mittels Amplitudenmodulation der Orte eines Paares mit derselben Sinusfrequenz, jedoch mit einer Phasenverschiebung von 180°, anzusteuern und das vom Detektor (24) aufgenommene Signal mittels einer Fouriertransformation auszuwerten, um die Intensitätsdifferenz zwischen den Orten des Paares zu berechnen.

2. Vorrichtung zur Messung ortsaufgelöster Strahlungssignale, insbesondere von Lichtsignalen, insbesondere zur reflektometrischen Interferenzspektroskopie (RIfS), mit einem Detektor (24), mit einem örtlichen Modulator (16) zur ortsaufgelösten Abbildung von N Orten auf den Detektor (24), und mit einem Computer (30), der konfiguriert ist, den örtlichen Modulator (16) zur Abbildung der N Orte mittels Amplitudenmodulation der N Orte mit derselben Modulations-$\sin^2$-Frequenz, jedoch mit einer Phasenverschiebung von jeweils 360°/N zueinander, auf den Detektor (24) anzusteuern und die vom Detektor (24) aufgenommenen Signale mittels einer Fourier-Transformation auszuwerten, um die Signalunterschiede der Orte zueinander zu berechnen.

3. Vorrichtung nach Anspruch 1 oder 2, mit einem Frequenzmultiplexer (40) zur Übertragung der amplitudenmodulierten Signale der Orte auf den Detektor (24) im Falle der Verwendung einer Fourier-Transformation.

4. Vorrichtung nach einem der Ansprüche 1 bis 3, bei welcher im Falle der Verwendung einer Fourier-Transformation der Modulator (16) als Spatial Light Modulator (SLM) ausgebildet ist, insbesondere als Mikrospiegelarray (DMD), der vorzugsweise mittels Pulsweitenmodulation (PWM) ein quasianabges, amplitudenmoduliertes Signal ausgibt.

5. Vorrichtung nach Anspruch 4, bei welcher im Falle der Verwendung einer Fourier-Transformation ein Tiefpassfilter (26) zur Unterdrückung der bei der PWM entstehenden Oberschwingungen vorgesehen ist.

6. Vorrichtung nach Anspruch 5, bei welcher im Falle der Verwendung einer Fourier-Transformation das Tiefpassfilter (26) dem Detektor (24) nachgeschaltet ist.

7. Vorrichtung nach Anspruch 6, bei welcher der Ausgang des Tiefpassfilters (26) über einen Analog-Digital-Wandler (ADC) (28) mit dem Computer (30) gekoppelt ist, wobei vorzugsweise ein Hochpassfilter (51) vorgesehen ist, das vorzugsweise nach einem dem Detektor (24) nachgeschalteten Verstärker (50) angeordnet ist.

8. Vorrichtung nach einem der Ansprüche 1 bis 7, mit einer Strahlungsquelle (12) zur Beleuchtung des SLMs (16), wobei vom SLM (16) emittierte Strahlung zum Beobachtungsobjekt (20) übertragen wird und die vom Beobachtungsobjekt (20) emittierte Strahlung auf den Detektor (24) abgebildet wird.

9. Vorrichtung nach einem der Ansprüche 1 bis 7, mit einer Strahlungsquelle (12) zur Beleuchtung des Beobachtungsobjektes (20), wobei vom Beobachtungsobjekt (20) emittierte Strahlung zu dem SLM (16) übertragen wird und die vom SLM (16) emittierte Strahlung auf den Detektor (24) abgebildet wird.

10. Vorrichtung nach einem der Ansprüche 1 bis 9, bei welcher der Detektor (24) als Photodetektor, insbesondere in Form einer Photodiode oder eines Photomultiplier Tubes (PMT), ausgebildet ist, welcher bevorzugt als Photodetektorarray ausgestaltet ist.

11. Vorrichtung nach Anspruch 10, bei welcher die Signale der Orte über ein Spektrometer (36) wellenlängenaufgelöst auf das Detektorarray (24) übertragen werden, und wobei der Computer (30) zur wellenlängenaufgelösten Berechnung der Intensitätsdifferenzen zwischen den Orten ausgebildet ist.

12. Vorrichtung nach einem der Ansprüche 1, oder 3 bis 11, soweit nicht auf Anspruch 2 rückbezogen, wobei der Computer konfiguriert ist, eine Mehrzahl von Ortspaaren von Beobachtungsorten und Referenzorten mit derselben Modulations-Sinusfrequenz, jedoch mit einer Phasenverschiebung von 180°, zu modulieren und die Signaldifferenz zwischen Beobachtungsort und Referenzort auszuwerten.

13. Vorrichtung nach Anspruch 12, bei welcher bei einer Messung einer Mehrzahl von Orten mit derselben Frequenz zur Durchführung eines Nullabgleichs einzelne Beobachtungsorte und/oder Referenzorte innerhalb eines Signalfeldes mit einer Mehrzahl von Beobachtungsorten - und/oder innerhalb eines Referenzfeldes mit einer Mehrzahl von Referenzorten zu- oder abgeschaltet werden.

14. Messverfahren zur ortsaufgelösten Messung von Strahlungssignalen, insbesondere von Lichtsignalen, insbesondere zur reflektometrischen Interferenzspektroskopie (RIfS), bei dem eine Mehrzahl von Ortspaaren mittels eines örtlichen Modulators (16) ortsaufgelöst gemeinsam auf einen Detektor (24) abgebildet werden und entweder durch Modulation der Orte eines Paares mit derselben Hadamard-Sequenz, wobei eine der Hadamard-Sequenzen an einem Ort gegenüber der anderen am zugeordneten anderen Ort invertiert ist, und mittels einer Hadamard-Transformation die Intensitätsdifferenz zwischen den Orten des Paares aus dem detektierten Signal berechnet wird, oder durch Amplitudenmodulation der Orte eines Paares mit derselben Sinusfrequenz, jedoch mit einer Phasenverschiebung von 180° und mittels einer Fourier-Transformation die Intensitätsdifferenz zwischen den Orten des Paares aus dem detektierten Signal berechnet wird.

15. Messverfahren zur ortsaufgelösten Messung von Strahlungssignalen, insbesondere von Lichtsignalen, insbesondere zur reflektometrischen Interferenzspektroskopie (RIfS), bei dem N Orte mittels eines örtlichen Modulators (16) mit derselben Modulations-$\sin^2$-Frequenz, jedoch mit einer Phasenverschiebung von jeweils 360°/N zueinander, amplitudenmoduliert werden und ortsaufgelöst gemeinsam auf einen Detektor (24) abgebildet werden und mittels einer Fourier-Transformation die Signalunterschiede der N Orte zueinander ausgewertet werden.

**Claims**

1. A device for measuring spatially resolved radiation signals, in particular light signals, in particular for the reflectometric interference spectroscopy (RIfS), comprising a spatial modulator (16) for the spatially resolved imaging of paired locations, further comprising a detector (24) for receiving a signal, and further comprising a computer (30) which is configured for controlling the spatial modulator (16) for imaging the paired locations onto the detector (24), either by means of a specific Hadamard sequency, wherein one of the Hadamard sequences is inverted at one location with respect to the other assigned location, and the signal received by the detector (24) is evaluated by means of a Hadamard transformation for computing the intensity difference between the paired locations, or which is configured for controlling the spatial modulator (16) for imaging the locations onto the detector (24) by means of amplitude modulating the locations with the same sinus frequency, however with a phase-shifting of 180°, and for evaluating the signal received by the detector (24) using a Fourier transformation for computing the intensity difference between the paired locations.

2. A device for the spatially resolved measurement of radiation signals, in particular of light signals, in particular for the reflectometric interference spectroscopy (RIfS), comprising a detector (24), a spatial modulator (16) imaging N locations onto the detector (24) in a spatially resolved way, and a computer (30) which is configured for adressing the spatial modulator (16) for imaging the N locations by means of amplitude modulation of the N locations with the same modulation frequency $\sin^2$, however with a phase-shifting of 360°/N with respect to each other, and for evaluating the signals received by the detector (24) using a Fourier transformation for computing the signal differences between the locations.

3. The device of claim 1 or 2, further comprising of a frequency multiplexer (40) for transmitting the amplitude-modulated signals of the locations onto the detector (24) in case of using a Fourier transformation.

4. The device of any of claims 1 to 3, wherein in case of using a Fourier transformation the modulator (16) is configured as a spatial light modulator (SLM), in particular as a micro mirror array (DMD), which preferably outputs a quasi-analogue, amplitude-modulated signal using pulse width modulation (PWM).

5. The device of claim 4, wherein in case of using a Fourier transformation there is provided a low-pass filter (26) for suppressing the harmonic oscillations generated by the PWM.

6. The device according to claim 5, wherein in case of using a Fourier transformation the low-pass filter (26) is arranged after the detector (24).

7. The device according to claim 6, wherein the output of the low-pass filter (26) is coupled to the computer (30) by means of an analog/digital converter (ADC) (28), wherein prferably a high-pass filter (51) is provided which, preferably, is arranged after an amplifier (50) arranged after the detector (24).

8. The device according to any of claims 1 to 7, comprising a radiation source (12) for illuminating the SLMs (16), wherein radiation emitted by the SLMs (16) is transmitted to the observation object (20), and the radiation emitted by the observation object (20) is imaged onto the detector (24).

9. The device according to any of claims 1 to 7, comprising a radiation source (12) for illuminating an observation object (20), wherein radiation emitted by the observation object (20) is transmitted to the SLM (16), and the radiation emitted by the SLM (16) is imaged onto the detector (24).

10. The device according to any of claims 1 to 9, wherein the detector (24) is configured as a photo detector, in particular being configured as a photo diode or as a photo multiplier tube (PMT), which preferably is configured as a photo detector array.

11. The device according to claim 10, wherein the signals of the locations are transmitted wavelength-resolved using a spectrometer (36) onto the detector array (24), and wherein the computer (30) is configured for a wavelength-resolved computation of the intensity differences between the locations.

12. The device of any of claims 1, or 3 to 11, as far as not depending from claim 2, wherein the computer is configured for evaluating a plurality of paired locations of observation locations and reference locations with the same modulation sinus-frequency, however with a phase-shifting of 180°, and for evaluating the signal difference between the observation location and the reference location.

13. The device according to claim, wherein during a measurement of a plurality of locations with the same frequency for performing a zero balancing there are switched on or off individual observation locations and/or reference locations within a signal field with a plurality of observation locations - and/or within a reference field with a plurality of reference locations.

14. A measuring method for the spatially measurement of radiation signals, in particular of light signals, wherein a plurality of paired locations are imaged by means of a spatial modulator (16) spatially resolved collectively onto a detector (24), and either the intensity difference between the locations is computed from the detected signal by modulating the locations with the same Hadamard sequency, wherein one of the Hadamard sequences is inverted at one location with respect to the other assigned location, or the intensity difference between the locations is computed using a Fourier transformation from the detected signal of the amplitude modulated, however with respect to each other phase-shifted signals of the paired locations.

15. A measuring method for the spatially resolved measurement of radiation signals, in particular of light signals, in particular for the reflectometric interference spectroscopy (RIfS), wherein N locations are amplitude-modulated with the same modulation frequency $sin^2$, however with a phase-shifting of 360°/N with respect to each other, and are imaged spatially resolved collectively onto a detector (24), and the signal differences of the N locations with respect to each other are evaluated using a Fourier transformation.

## Revendications

1. Dispositif de mesure de signaux de rayonnement à résolution spatiale, en particulier pour la spectroscopie à interférence réflectométrique (RIfS), comprenant un modulateur spatial (16) pour la représentation à résolution spatiale d'une pluralité de paires de lieux, un détecteur (24) pour enregistrer un signal, et un ordinateur (30) qui est configuré soit pour piloter le modulateur spatial (16) pour la représentation des lieux d'une paire sur le détecteur (24) au moyen d'une séquence de Hadamard déterminée, l'une des séquences de Hadamard en un lieu étant inversée par rapport à l'autre à l'autre lieu associé, et pour évaluer le signal enregistré par le détecteur (24) au moyen d'une transformation de Hadamard afin de calculer la différence d'intensité entre les lieux de la paire, soit pour piloter le modulateur spatial (16) pour la représentation des lieux sur le détecteur (24) au moyen d'une modulation d'amplitude des lieux d'une paire avec la même fréquence sinusoïdale mais avec un déphasage de 180°, et pour évaluer le signal enregistré par le détecteur (24) au moyen d'une transformation de Fourier afin de calculer la différence d'intensité entre les lieux de la paire.

2. Dispositif de mesure de signaux de rayonnement à résolution spatiale, en particulier de signaux lumineux, en particulier pour la spectroscopie à interférence réflectométrique (RIfS), comprenant un détecteur (24), un modulateur spatial (16) pour la représentation à résolution spatiale de N lieux sur le détecteur (24), et un ordinateur (30) qui est configuré pour piloter le modulateur spatial (16) pour la représentation des N lieux au moyen d'une modulation d'amplitude des N lieux avec la même fréquence de modulation $sin^2$ mais avec un déphasage de respectivement 360°/N les uns par rapport aux autres, sur le détecteur (24), et pour évaluer les signaux enregistrés par le détecteur (24) au moyen d'une transformation de Fourier afin de calculer des différences de signal des lieux les uns par rapport aux autres.

3. Dispositif selon la revendication 1 ou 2, comprenant un multiplexeur de fréquence (40) pour transmettre au détecteur (24) les signaux modulés en amplitude des lieux si une transformation de Fourier est utilisée.

4. Dispositif selon l'une quelconque des revendications 1 à 3, dans lequel, si une transformation de Fourier est utilisée, le modulateur (16) est réalisé sous forme de modulateur spatial de lumière (SLM), en particulier sous forme de réseau de micro-miroirs (DMD), qui sort de préférence au moyen d'une modulation d'impulsions en largeur (PWM) un signal quasi-analogique, modulé en amplitude.

5. Dispositif selon la revendication 4, dans lequel, si une transformation de Fourier est utilisée, un filtre passe-bas (26) est prévu pour supprimer les harmoniques apparaissant lors de la PWM.

6. Dispositif selon la revendication 5, dans lequel, si une transformation de Fourier est utilisée, le filtre passe-bas (26) est placé en aval du détecteur (24).

7. Dispositif selon la revendication 6, dans lequel la sortie du filtre passe-bas (26) est couplée à l'ordinateur (30) par l'intermédiaire d'un convertisseur analogique/numérique (ADC) (28), un filtre passe-haut (51) étant prévu de préférence qui est disposé de préférence après un amplificateur (50) placé en aval du détecteur (24).

8. Dispositif selon l'une quelconque des revendications 1 à 7, comprenant une source de rayonnement (12) pour éclairer le SLM (16), un rayonnement émis par le SLM (16) étant transmis à l'objet d'observation (20), et le rayonnement émis par l'objet d'observation (20) étant représenté sur le détecteur (24).

9. Dispositif selon l'une quelconque des revendications 1 à 7, comprenant une source de rayonnement (12) pour éclairer l'objet d'observation (20), un rayonnement émis par l'objet d'observation (20) étant transmis au SLM (16) et le rayonnement émis par le SLM (16) étant représenté sur le détecteur (24).

10. Dispositif selon l'une quelconque des revendications 1 à 9, dans lequel le détecteur (24) est réalisé sous forme de photodétecteur, en particulier sous forme de photodiode ou de tube photomultiplicateur (PMT) qui est de préférence configuré sous forme de réseau de photodétecteurs.

11. Dispositif selon la revendication 10, dans lequel les signaux des lieux sont transmis par l'intermédiaire d'un spectromètre (36) à résolution de longueur d'onde au réseau de détecteurs (24), et l'ordinateur (30) étant réalisé pour le calcul à résolution en longueur d'onde des différences d'intensité entre les lieux.

12. Dispositif selon l'une quelconque des revendications 1, ou 3 à 11, dans la mesure où elle ne dépend pas de la revendication 2, dans lequel l'ordinateur est configuré pour moduler une pluralité de paires de lieux de lieux d'observation et de lieux de référence avec la même fréquence de modulation sinusoïdale mais avec un déphasage de 180°, et pour évaluer la différence de signal entre le lieu d'observation et le lieu de référence.

13. Dispositif selon la revendication 12, dans lequel, lors d'une mesure d'une pluralité de lieux avec la même fréquence pour effectuer une compensation à zéro, des lieux d'observation individuels et/ou des lieux de référence à l'intérieur d'un champ de signaux avec une pluralité de lieux d'observation, et/ou à l'intérieur d'un champ de référence avec une pluralité de lieux de référence, sont mis en ou hors circuit.

14. Procédé de mesure pour la mesure à résolution spatiale de signaux de rayonnement, en particulier de signaux lumineux, en particulier pour la spectroscopie à interférence réflectométrique (RIfS), dans lequel une pluralité de paires de lieux est représentée à résolution spatiale en commun sur un détecteur (24) au moyen d'un modulateur spatial (16), et soit par modulation des lieux d'une paire avec la même séquence de Hadamard, l'une des séquences de Hadamard en un lieu étant inversée par rapport à l'autre à l'autre lieu associé, et la différence d'intensité entre les lieux de la paire est calculée au moyen d'une transformation de Hadamard à partir du signal détecté, soit par modulation d'amplitude des lieux d'une paire avec la même fréquence sinusoïdale mais avec un déphasage de 180°, la différence d'intensité entre les lieux de la paire est calculée à partir du signal détecté.

15. Procédé de mesure pour la mesure à résolution spatiale de signaux de rayonnement, en particulier de signaux lumineux, en particulier pour la spectroscopie à interférence réflectométrique (RIfS), dans lequel N lieux sont modulés en amplitude au moyen d'un modulateur spatial (16) avec la même fréquence de modulation $\sin^2$ mais avec un déphasage de respectivement 360°/N les uns par rapport aux autres, sont représentés à résolution spatiale en commun sur un détecteur (24), et au moyen d'une transformation de Fourier, les différences de signal des N lieux les uns par rapport aux autres sont évaluées.

Fig. 1

Fig. 2

EP 3 491 351 B1

Fig. 3

EP 3 491 351 B1

**Fig. 4**

EP 3 491 351 B1

Fig. 5

**Fig. 6**

EP 3 491 351 B1

Fig. 7

AM

Signal - 1
Signal - 2
Signal - 3
Signal - 4
Signal - 5

10

22

24

Detektor

Kanal

26

Tiefpass

20

16

14

12

18

DMD

PWM
Modulator

40 KHz
50 KHz
60 KHz
70 KHz
80 KHz

FDM

30

CPU/µC/IC

28

ADC

Demulator

40 KHz → Signal - 1
50 KHz → Signal - 2
60 KHz → Signal - 3
70 KHz → Signal - 4
80 KHz → Signal - 5

EP 3 491 351 B1

EP 3 491 351 B1

Fig. 8a)

Fig. 8b)

$$V_{out} = I_{TIA} R_{TIA} = (I_{Ph} - I_{VCCS}) R_{TIA}$$

Fig. 12

Fig. 9

| | | FFT | | |
|---|---|---|---|---|
| 40 kHz | 50 kHz | 60 kHz | 70 kHz | 80 kHz |
| 25 | 92 | 2 | 15 | 115 |
| 49 | 0 | 6 | 59 | 65 |
| 8 | 45 | 58 | 11 | 21 |
| 45 | 1 | 36 | 32 | 21 |
| Spot 1 | Spot 2 | Spot 3 | Spot 4 | Spot 5 |

33

34

36

# Fig. 10

a)                    b)

# Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6208413 B1

**In der Beschreibung aufgeführte Nicht-Patentliteratur**

- **GÜNTHER GAUGLITZ et al.** Strategies for label-free optical detection. *Adv Biochem Engin/Biotechnol,* 2008, vol. 109, 395-432
- **A. BRECHT ; G. GAUGLITZ.** *Analytica Chimica Acta,* 1997, vol. 347, 219-233
- **SWIFT, R.D. et al.** Hadamard Transform Imager and Imaging Spectrometer. *Applied Optics,* 1976, vol. 15 (6), 1595-1609
- **SCOTT S. HOWARD et al.** Frequency-multiplexed in vivo multiphoton phosphorescence lifetime microscopy. *Nature Photonics,* 16. Dezember 2012, vol. 7 (1
- **MATTHEW P. EDGAR et al.** Simultaneous real-time visible and infrared video with single-pixel detectors. *Scientific Reports,* 22. Mai 2015, vol. 5 (1